# EUROPEAN PATENT APPLICATION

(11) **EP 1 942 174 A2**
(43) Date of publication of application: **09.07.2008**
(21) Application number: 07380245.6
(22) Date of filing: 06.09.2007
(51) Int. Cl.: C09K 21/14

(54) **Fireproof formulation and corresponding production method**

(30) Priority: 15.09.2006 ES 200602344
(71) Applicant: Rury Finance Inc., Panamá (PA)
(72) Inventor: Bonacini, Vittorio, 41927 Mairena del Aljarafe (Sevilla) (ES)
(74) Representative: Curell Aguilà, Marcelino

(57) **Abstract**

Fireproof formulation and corresponding production method. This fireproof formulation is suitable for protecting secondary structures and elements against fire in industrial, construction, nautical and transport sectors, and it is characterized in that it comprises
[a] a polyester resin,
[b] cork particles,
[c] water, and
[d] a fire-retardant catalyst.

The invention also relates to a method for producing the fireproof formulation according to the invention.

## Description

### Field of the invention

The invention relates to a fireproof formulation suitable for protecting secondary structures and elements against fire in industrial, construction, nautical and transport sectors.

The invention also relates to a method for producing the formulation according to the invention.

### State of the art

In the construction sector, as well as in industrial sectors, there are fire protection standards both for structural elements, and all kinds of installations. These standards aim to minimize the effects caused by fire, in other words, they try to delay the evolution of the fire as much as possible, so as to facilitate the evacuation and fire fighting tasks. Also, these standards try to keep the fire temperature as low as possible, thereby again slowing down the evolution of the fire, and on the other hand they reduce the particularly dangerous collateral effects of fire, such as the loss of mechanical resistance in structural elements, which can lead to support structures collapsing.

In Spain, the performance requirements of materials in the presence of fire are defined by establishing the class that these materials must comply according to the Spanish standard UNE 23 727. These classes are called M0, M1, M2, M3 and M4. The number of each class indicates the relative magnitude with which the corresponding materials can enhance the development of a fire. Therefore, Class M0 indicates that the material is non-combustible with respect to the normalised thermal action of the corresponding test. A Class M1 material is combustible, but not inflammable, which implies that it does not further burn when the supply of heat from an external source is interrupted. Class M2, M3 and M4 materials can be considered to have a moderate, average or high degree of flammability, respectively.

One of the measures adopted in the state of the art for complying with standards consists in coating structures and installations with fireproof products in the form of paste, paint ..., thereby improving their performance in the presence of fire. However, the known coatings cannot offer all the necessary properties which should be expected from them. In particular, fire resistance is one of the important factors in these products, but on the other hand these coatings must also have other characteristics such as good adhesion to the surfaces on which they are applied, good elasticity, good resistance to fungi and bacteria, long term conservation of fireproof properties, as well as zero toxicity once hardened. Finally, it is very important that these products have a reduced emission of toxic fumes in the presence of fire.

### Disclosure of the invention

The aim of the invention is to overcome these drawbacks. This purpose is achieved by means of a fireproof formulation of the type indicated at the beginning, characterized in that it comprises
[a] a polyester resin,
[b] cork particles,
[c] water, and
[d] a fire retardant catalyst

The polyester resin is particularly appropriate for substantially improving the fireproof properties of this formulation. For example, the products known in the state of the art use acrylic resin polymers. These polymers suffer from the drawback that they open at very low temperatures, approximately 170°C, and release a large amount of fumes. On the other hand, the polyester resin can resist very high temperatures. Also, the polyester resin guarantees low fume emission and affords elasticity and adherence to the formulation. Preferably this polyester resin is unsaturated, orthophthalic, loaded, non-accelerated and tixotropical.

Even though the cork particles are combustible, they are not inflammable, and therefore they substantially improve the formulation's fireproof properties.

As already mentioned, the formulation according to the invention must avoid the emission of toxic fumes. So a water base formulation is particularly appropriate to achieve this aim. In fact, solvent based formulations have become obsolete because of their high toxicity.

Finally, the fire retardant catalyst attempts to further improve the fireproof properties of the formulation and in particular prevent its flammability. The catalyst binds easily to the polyester resin, and not to other types of resins, for example, acrylic resins, because the required percentage of this catalyst would create too elastic a mixture which could not be sprayed or used industrially.

Preferably, the percentage by weight of the polyester resin in the formulation is comprised between 5 and 40%, and preferably between 20 and 35% and the percentage of cork particles is comprised between 1 and 15%, and preferably between 5 and 10%. These ranges have proved to be particularly advantageous insofar as obtaining Class M1 fireproof according to Standard UNE 23 727.

In a formulation of this type, the diameter of the cork particles is an important factor. In particular, it is especially interesting for the formulation to have a pasty texture, so that it can adhere ideally to the surface. Nevertheless, it is recommendable that this paste be fluid enough to be applied by spraying. This is the fastest application method, and also the most economical. So, preferably, at least 99% of the cork particles have a diameter comprised between 0.1 and 3 mm, and preferably at least 90% have a diameter comprised between 0.5 and 2 mm. However, it is not omitted that this paste can be applied using other conventional methods employed in the sector, such as by mechanical extension using a laying trowel, rollers or a scraper.

Preferably the fire retardant catalyst is an ammonium polyphosphate that is comprised in the formulation between 0.1 and 1%, and preferably between 0.2 and 0.6%. The catalyst acts by decomposing the carbon containing compounds and releasing gases that promote the formulation's intumescence, in other words, that enhance the increased volume of the coating by forming bubbles in the inside thereof. This effect forms a fireproof layer of carbon that helps to protect the coated elements from fire and to keep their superficial temperature as low as possible, thus enormously reducing the damage caused to supporting structures to which the formulation is applied. Also, the ammonium polyphosphate is free of halogens, which are particularly toxic, and therefore not very suitable for a formulation of this type.

One of the main problems in the state-of-the-art formulations is that their adherence is not guaranteed over the long term. So, it is usual to see how, with time, surfaces to which the formulation has been applied, end up cracking, in other words, that the coating comes off and therefore the surface's fireproof property disappears. So, optionally, the formulation according to the invention comprises an adherence enhancing thickening agent, said thickening agent preferably being cellulosic glue.

The time between producing the formulation and applying it definitively can be relatively long. Therefore, it is essential that the product does not dry once it is packaged, and that it maintains its fluidity property until it is applied. Thus, preferably the formulation comprises a plastic paint, and the percentage by weight of said plastic paint in said formulation is comprised between 10 and 50%, and preferably between 15 and 45%. Preferably the paint belongs to class M1 described above, since the final aim is that the formulation complies with the requirements in this class. This way, a product is obtained that has the best fireproof properties for its class.

As already mentioned, another important property of a fireproof product is its long-term behaviour. One of the factors that contribute to degrading this type of products is fungi and bacteria. In applications where the environment is particularly humid, such as for example the nautical sector, the presence of fungi and bacteria is particularly prolific. Therefore, preferably, the formulation comprises a biocide, which has a percentage by weight in the formulation between 0.1 and 1%, and preferably between 0.3 and 0.6%.

Preferably the formulation comprises silica sand and its percentage by weight in the formulation is comprised between 1 and 10%, and preferably between 3 and 5%. The silica sand improves the formulation's fireproof property even more and helps to thicken the mixture.

Preferably a formulation according to the invention is made up of the following components within the following percentage by weight ranges:
- a polyester resin between 20 and 35%
- a vegetable oil between 1 and 8%
- cork particles between 5 and 10%
- sodium hydroxide between 0.7 and 2%
- water between 30 and 40%
- biocide between 0.3 and 0.6%
- a combustible, but non-flammable, plastic paint between 15 and 45%
- cellulosic glue between 0.5 and 2%
- silica sand between 3% and 5%, and
- ammonium polyphosphate between 0.2 and 0.6%

The varied percentage of each component will make it possible to improve the properties needed for each particular application, such as for example, better fireproof quality, better adherence, lower fume emission, greater thickness.

So, for example, preferably the composition comprises the following components in percentage by weight:
- a base at 25%, with said base comprising a sodium hydroxide, a vegetable oil, a cellulosic glue, water and a biocide,
- a combustible but non-flammable plastic paint at 27%,
- cork particles at 8.4%,
- silica sand at 4.2%,
- a polyester resin at 31 %,
- an ammonium polyphosphate at 0.3% and
- water at 4.1% by weight.

This composition makes it possible to obtain a formulation that has particularly optimum Fireproof properties, and which complies with the requirements for being classified within class M1 of the UNE 23 727 standard.

The invention also envisages a method for producing a formulation according to the invention. So, preferably a formulation comprising a polyester resin, cork particles, water and ammonium polyphosphate, also comprises a vegetable oil, sodium hydroxide, a biocide, a combustible but non-flammable plastic paint, a cellulosic glue and a silica sand, comprises the following stages:
- Preparation by mixing an aqueous solution of sodium hydroxide and vegetable oil,
- Adding to the solution the cellulosic glue, a first part of the water and the biocide to form a first base,
- Adding the plastic paint, the cork particles and the silica sand to the bas by mixing a second part of the water, the plastic paint, the cork particles, the silica sand and the first base to form a second base, and
- Adding polyester resin and ammonium polyphosphate to the second base.

### Detailed description of some embodiments of the invention

In a first stage, an aqueous solution of sodium hydroxide was prepared to which vegetable oil was added and it was mixed by an industrial beater at high speed. So this solution was made up of 3% sodium hydroxide, 16% vegetable oil and 81% water. This solution was left to stand for a minimum of 120 hours until the liquid compound was converted into a dense, viscose gel.

In the second stage an appropriate amount of cellulosic glue, water and biocide were added to the gel obtained in the first stage. For example, for a 16 kg mass of gel, 2.8 kg of cellulosic glue, 80 litres of water and 1.82 kg of biocide were added. This mixture, which hereinafter will be referred to by its generic name of "base", was beaten until a fluid, homogenous product, without any lumps, was obtained.

In the final stage, 25 kg of the first base were placed in a rotary mixer and 4.1 kg of water, 27 kg of class M1 paint, 8.4 kg of cork, 4.2 kg of silica sand were added. Immediately afterwards while continually mixing, 31 kg of polyester resin were added together with 0.3 kg of ammonium polyphosphate while mixing and homogenizing the mixture. In order to improve the homogenization mixing can also be performed using an electric high speed mixer in the actual mixer.

Thus, the fireproof formulation obtained would present the following percentages by weight:

| Component | Percentage by weight |
|---|---|
| Base | 25 % |
| Class M1 paint | 27 % |
| Cork | 8.4 % |
| Silica sand | 4.2 % |
| Polyester resin | 31 % |
| Ammonium polyphosphate | 0.3% |
| Water | 4.1% |

The obtained formulation has a semi-dense, pasty consistency that can be applied to the surfaces to be protected using the conventional methods employed by the sector. Nevertheless, the optimum method of applying the formulation according to the invention is by spraying it using a compressed air gun. Thanks to this system a particularly uniform distribution is achieved. The optimum thickness for this formulation is comprised between 2 and 3 mm, which must be applied in two successive layers. For thicknesses between 4 and 6 mm, successive layers must be applied once the previous layers have dried properly.

Another appropriate spraying system for this paste can be by using a spray pump like the ones used to spray concrete or plaster.

The formulation according to the invention can be applied to all kinds of rough surfaces, such as concrete, brick, rough plastering, wood, or smooth surfaces such as iron, glass, ceramic, plastic, etc.

So this formulation can fulfil the Class M1 requirements of Standard UNE 23 727 on non-flammability, and it also has additional properties that the state-of-the-art products do not have, combined in one single product. These are as follows: high adherence, elasticity, low fume emission, stability over time and protection against fungi and bacteria.

## Claims

1. Fireproof formulation suitable for protecting secondary structures and elements against fire in industrial, construction, nautical and transport sectors, **characterized in that** it comprises
[a] a polyester resin,
[b] cork particles,
[c] water, and
[d] a fire-retardant catalyst.

2. Fireproof formulation according to claim 1, **characterized in that** the percentage by weight of said polyester resin in said formulation is comprised between 5 and 40%, and preferably between 20 and 35%.

3. Fireproof formulation according to claim 1 or 2, **characterized in that** the percentage by weight of said cork particles in said formulation is comprised between 1 and 15%, and preferably between 5 and 10%.

4. Fireproof formulation according to any of the claims 1 to 3, **characterized in that** at least 99% of said cork particles have a diameter comprised between 0.1 and 3 mm and preferably at least 90% have a diameter comprised between 0.5 and 2 mm.

5. Fireproof formulation according to any of the claims 1 to 4, **characterized in that** said fire-retardant catalyst is ammonium polyphosphate.

6. Fireproof formulation according to claim 5, **characterized in that** the percentage by weight of said ammonium polyphosphate in said formulation is comprised between 0.1 and 1% and preferably between 0.2 and 0.6%.

7. Fireproof formulation according to claims 1 to 6, **characterized in that** it comprises an adherence enhancing thickening agent.

8. Fireproof formulation according to claim 7, **characterized in that** said thickening agent is a cellulosic glue.

9. Fireproof formulation according to claims 1 to 8, **characterized in that** it comprises a combustible but not inflammable plastic paint, and **in that** the percentage by weight of said plastic paint in said formulation is comprised between 10 and 50%, and preferably between 15 and 45%.

10. Fireproof formulation according to claims 1 to 9, **characterized in that** said formulation comprises a biocide.

11. Fireproof formulation according to claim 10, **characterized in that** the percentage by weight of said biocide in said formulation is comprised between 0.1 and 1%, and preferably between 0.3 and 0.6%.

12. Fireproof formulation according to claims 1 to 11, **characterized in that** said formulation comprises silica sand.

13. Fireproof formulation according to claim 12, **characterized in that** the percentage by weight of said silica sand in said formulation is comprised between 1 and 10%, and preferably between 3 and 5%.

14. Fireproof formulation according to claim 1, **characterized in that** said formulation comprises the following components in the following percentage by weight ranges:
- a polyester resin between 20 and 35%
- a vegetable oil between 1 and 8%
- cork particles between 5 and 10%
- a sodium hydroxide between 0.7 and 2%
- water between 30 and 40%
- a biocide between 0.3 and 0.6%
- a combustible but non-flammable plastic paint between 15 and 45%
- a cellulosic glue between 0.5 and 2%
- a silica sand between 3% and 5%, and
- an ammonium polyphosphate between 0.2 and 0.6%

15. Fireproof formulation according to claim 1, **characterized in that** the composition comprises the following components in percentage by weight:
- a base at 25%, wherein said base comprises a sodium hydroxide, a vegetable oil, a cellulosic glue, water and biocide,
- a combustible but non-flammable plastic paint at 27%,
- cork particles at 8.4%,
- a silica sand at 4.2%,
- a polyester resin at 31 %,
- an ammonium polyphosphate at 0.3% and
- water at 4.1 % by weight.

16. Method for producing a fireproof formulation according to claim 1, **characterized in that** it also comprises a vegetable oil, sodium hydroxide, a biocide, a combustible but non-flammable plastic paint, a cellulosic glue and a silica sand, comprises the following stages:
- Preparation by mixing an aqueous solution of said sodium hydroxide and said vegetable oil,
- Adding to said solution said cellulosic glue, a first part of said water and said biocide to form a first base,
- Adding said plastic paint, said cork particles and said silica sand to the base, by mixing a second part of said water, said plastic paint, said cork particles, said silica sand and said first base to form a second base, and
- Adding said polyester resin and said ammonium polyphosphate to said second base.
